# EUROPEAN PATENT SPECIFICATION

(11) **EP 3 549 844 B1**
(45) Date of publication and mention of the grant of the patent: **06.04.2022**
(21) Application number: 17888628.9
(22) Date of filing: 20.10.2017
(51) Int. Cl.: B62D 5/04, F16H 55/22

(54) **ELECTRIC POWER STEERING SYSTEM**
ELEKTRISCHES SERVOLENKSYSTEM
SYSTÈME DE DIRECTION À ASSISTANCE ÉLECTRIQUE

(30) Priority: 29.12.2016 KR 20160183068
(43) Date of publication of application: 09.10.2019
(73) Proprietor: erae AMS Co., Ltd., Daegu 42981 (KR)
(72) Inventor: PARK, Se Jung, Dalseong-gun Daegu 42981 (KR); SON, Jung Rak, Dalseong-gun Daegu 42981 (KR); LEE, Chung Shin, Dalseong-gun Daegu 42981 (KR)
(74) Representative: Manitz Finsterwald Patent- und Rechtsanwaltspartnerschaft mbB
(86) International application number: PCT/KR2017/011648
(87) International publication number: WO 2018/124441

(56) References cited:
- EP-A1- 3 095 672
- JP-A- 2008 081 060
- JP-A- 2008 081 060
- JP-A- 2010 047 106
- JP-A- 2012 087 881
- JP-A- 2015 123 769
- KR-B1- 101 491 304
- US-A1- 2014 352 467

## Description

### [Technical Field]

The present invention relates to an electric power steering system, and more particularly to a tilt structure which supports a worm shaft of an electric power steering system.

### [Background Art]

An electric power steering system provides a steering assistance for a steering system of a vehicle, and assists a steering force of a driver to provide a stable steering feeling by a motor driven by an electronic control unit depending on vehicle's driving conditions sensed by a vehicle speed sensor, a steering torque sensor or the like. Respective power steering system are for instance disclosed in US 2014/0352467 A1 and EP 3 095 672 A1 , the latter disclosing the features of the preamble of the independent claim.

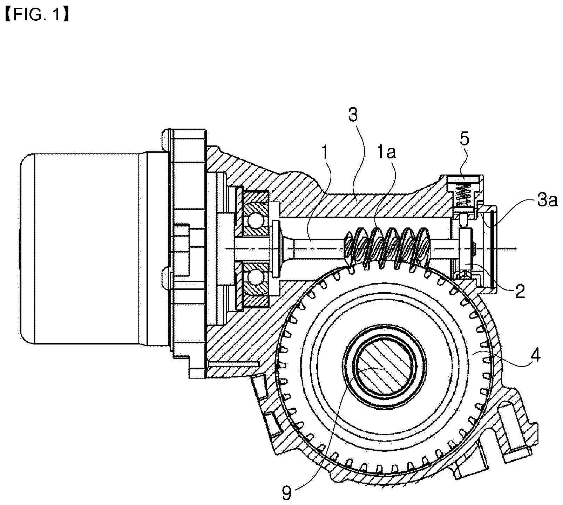

Referring to FIG. 1, an electric power steering system includes a motor, a worm shaft 1 which is connected to the motor to be rotatable therewith, and a worm wheel 4 which is coupled to a steering column 9 and is engaged with the worm shaft 1 to be rotated, and is configured to provide a stable steering by adding a rotation force of the worm shaft 1 to the steering column 9 via the worm wheel 4 by a motor driven depending on driving conditions.

Further, by fastening a bearing 2 to an end portion of the worm shaft 1 by a press-fit connection and by using a regulation portion 5 which elastically supports the bearing 2 toward the worm wheel 4, a tilt mechanism for absorbing by the regulation portion 5 a clearance which may occur between a worm 1a and the worm wheel 4 is provided.

However, such a conventional electric power steering system has a complicated structure and also is difficult to be assembled.

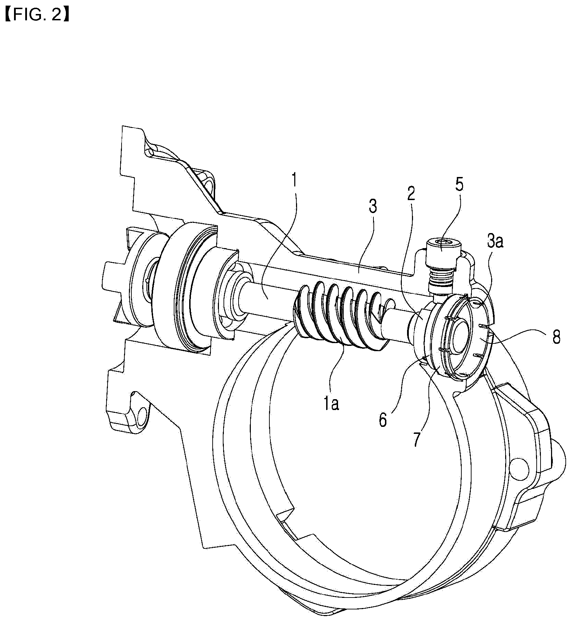

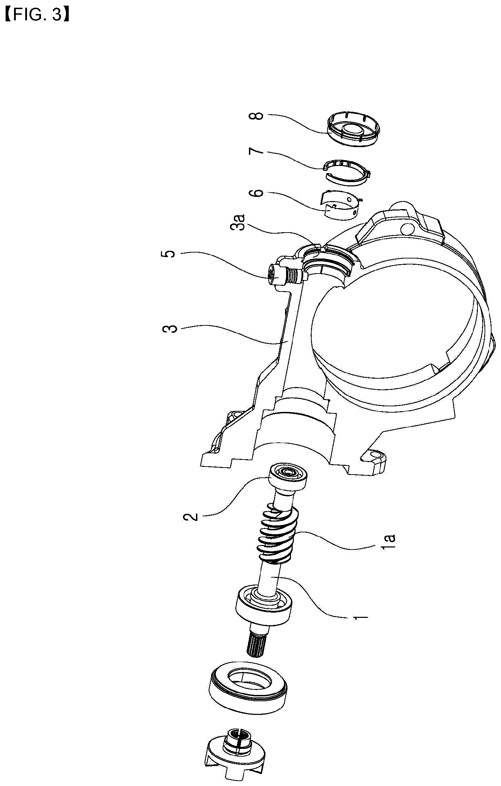

In detail, as shown in FIG. 1 to FIG. 3, in a conventional electric power steering system, the bearing 2 is fastened to an end portion of the worm shaft 1 by a press-fit connection, and the worm shaft 1 is subsequently inserted into a housing 3 to engage the worm 1a of the worm shaft 1 with the worm wheel 4 coupled to the steering column 9. In addition, an elastic ring 6 is inserted into the housing 3 via an opening hole 3a thereof and is coupled to an outer circumferential surface of the bearing 2 in a state that the worm 1a and the worm wheel 4 are engaged with one another, and a damping ring 7 is additionally coupled to an outer circumferential surface of the elastic ring 6 enclosing the bearing 2. In addition, after coupling the damping ring 7 to the outer circumferential surface of the elastic ring 6, the regulation portion 5 which can elastically support the damping ring 7 in a perpendicular direction is inserted into a through hole which is perpendicularly elongated to a portion where the damping ring 7 is disposed, and then a dust cover 8 is finally coupled to the opening hole 3a of the housing 3.

That is, since in a conventional electric power steering system, even after fastening the bearing 2 to an end portion of the worm shaft 1 by a press-fit connection and disposing the worm shaft 1 within the housing 3, the elastic ring 6 and the damping ring 7 should be additionally disposed around the bearing, and the dust cover 8 should also be coupled to the opening hole 3a of the housing 3 after disposing the elastic ring 6, the damping ring 7 and the regulation portion 5, the overall structure is complicated and thus the manufacturing and assembling processes are complicated to lead a deterioration of a productivity and an increase of a manufacturing cost.

Also, since the elastic ring 6 and the damping ring 7 are coupled to an outer circumferential surface of the bearing 2 within the housing 3 under an arrangement of the bearing 2 to be parallel with the receiving space, it is difficult to carry out a precise assembling and accordingly a center of the worm shaft 1 may be misaligned and a clearance between the worm 1a and the worm wheel 4 may occur, and thus it may be necessary to compensate this.

Further, if load is transmitted on the worm shaft 1 in an axial direction thereof by an external force exerted on the housing 3, the dust cover 8 coupled to the housing 3 may be separated from the housing 3 through the opening hole 3a of the housing 3 and accordingly the elastic ring 6 and the damping ring 7 coupled to the bearing 2 are not supported by the dust cover 8 so as to be separated from the housing 3.

Prior document: KR Patent Publication No. 10-2014-0014714

### [Detailed Description of the Invention]

### [Technical Problem]

It is an object of the present invention to provide an electric power steering system which has a simple inner structure so as to be easily assembled and which prevents parts from being separated from a housing.

### [Technical Solutions]

An electric power steering system according to an exemplary embodiment of the present invention includes: a housing defining a receiving space therein; a worm shaft which is disposed in the receiving space to be engaged with a worm wheel; a tilt plug which is coupled to an inner surface of the housing to be fastened to a predetermined position and is coupled to the worm shaft which is inserted into the receiving space to support the worm shaft; and an elastic supporter which is installed to the housing to elastically support the tilt plug toward the worm wheel. The tilt plug is provided with a coupling protrusion which is protruded from an end portion of the tilt plug in a center axis of the tilt plug and slides into an inner surface of the housing, and the inner surface of the housing is provided with a coupling indentation into which the coupling protrusion slides so as to restrict rotation of the tilt plug.

A first receiving space including a first receiving portion in which the worm shaft is received and a second receiving portion which is formed in a shape corresponding to an outer surface of the tilt plug to receive the tilt plug, a second receiving space in which the worm wheel is disposed, and a third receiving space in which the elastic supporter is disposed may be defined in the housing.

One side of the first receiving space may be formed to be closed so as to support the tilt plug which is pushed by the worm shaft when the worm shaft is being coupled to the tilt plug.

A press-fitted member, which is press-fitted into a space between an outer circumferential surface of the worm shaft and an inner circumferential surface of the tilt plug to fasten the worm shaft to the tilt plug, may be coupled to the worm shaft.

The tilt plug includes: a bearing which is coupled to the worm shaft; a sliding coupling portion which supports the bearing in a direction of a center axis of the tilt plug and is provided with the coupling protrusion formed on one surface thereof to be coupled to an inner surface of the housing; and an elastic ring which encloses an outer circumferential surface of the bearing and is coupled to the sliding coupling portion to fasten the bearing.

A hooking portion which is bent from an end portion of the elastic ring toward a center axis in a predetermined angle to be hooked to an outer surface of the sliding coupling portion to be supported thereto is formed in the elastic ring, and a hooking indentation to which the hooking portion is hooked for fastening is formed in the sliding coupling portion.

A portion of the elastic ring may be opened so as to expose a portion of the bearing to the receiving space, and the coupling indentation may be formed at a predetermined position to align the open portion of the elastic ring to face the receiving space in which the elastic supporter is disposed when the tilt plug is installed to the housing so that an end portion of the elastic supporter directly contacts the bearing when the tilt plug is installed in the housing.

### [Effect of the Invention]

According to the present invention, instead of previously fastening a bearing to an end portion of a worm shaft by a press-fit connection and then disposing the same within the housing and coupling a plurality of parts to the bearing, since a tilt plug is previously disposed in an inner surface of the housing by a sliding coupling and a worm shaft is coupled to the tilt plug so that the tilt plug can align a center axis of the worm shaft to coincide with a center axis of a receiving space, an inner structure can be simple and the assembling process can be reduced so that the productivity can be enhanced and the manufacturing cost can be reduced.

Further, since the tilt plug is previously sliding-coupled to an inner surface of the housing to be disposed at a predetermined position before it is coupled to the worm shaft, a precise coupling with the worm shaft is possible, so a reassembling process which may be caused by twisting of the worm shaft can be prevented and a steering performance of a vehicle can be improved.

Further, since one side of the housing in which the tilt plug is disposed is formed to be closed, parts existing in the housing can be prevented from separated from the housing even when external force is applied to the housing.

### [Brief Description of Drawings]

FIG. 1 to FIG. 3 are drawings showing a conventional electric power steering system.
FIG. 4 is a perspective view of an electric power steering system according to an embodiment of the present invention.
FIG. 5 is a sectional view of an electric power steering system according to an embodiment of the present invention.
FIG. 6 is an exploded perspective view of an electric power steering system according to an embodiment of the present invention.
FIG. 7 is a perspective view of a tilt plug of an electric power steering system according to an embodiment of the present invention.
FIG. 8 is an exploded perspective view of a tilt plug of an electric power steering system according to an embodiment of the present invention.

### [Detailed Description]

Embodiments of the present invention will be described hereinafter with reference to the accompanying drawings.

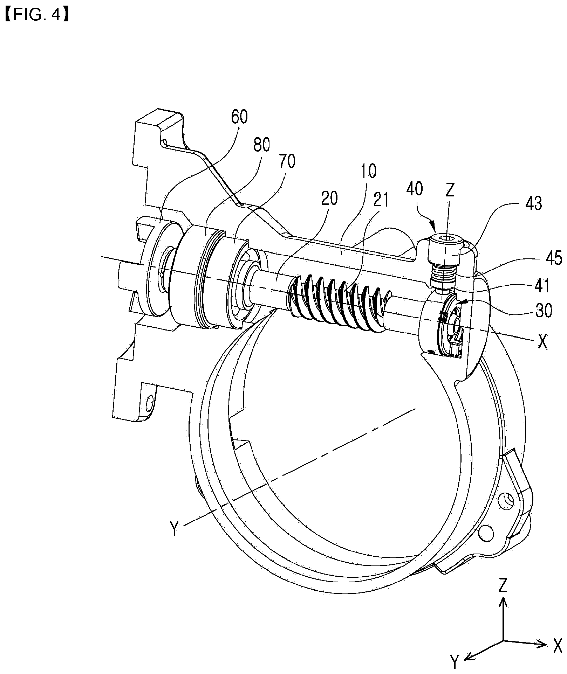

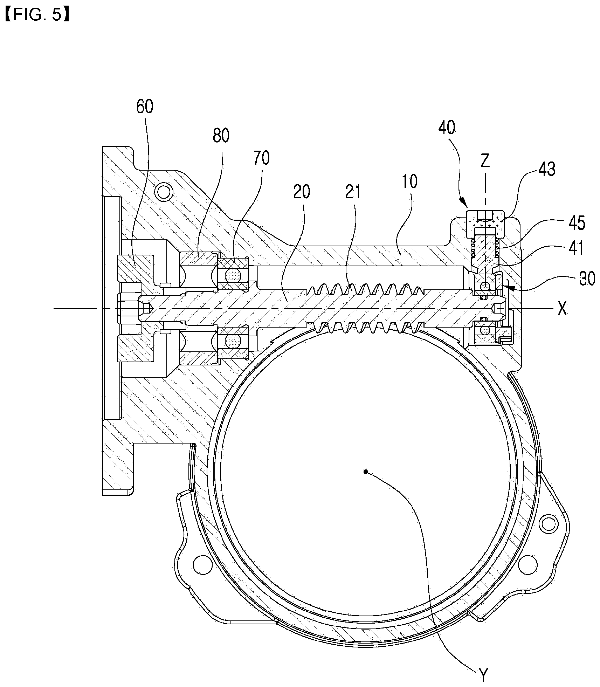

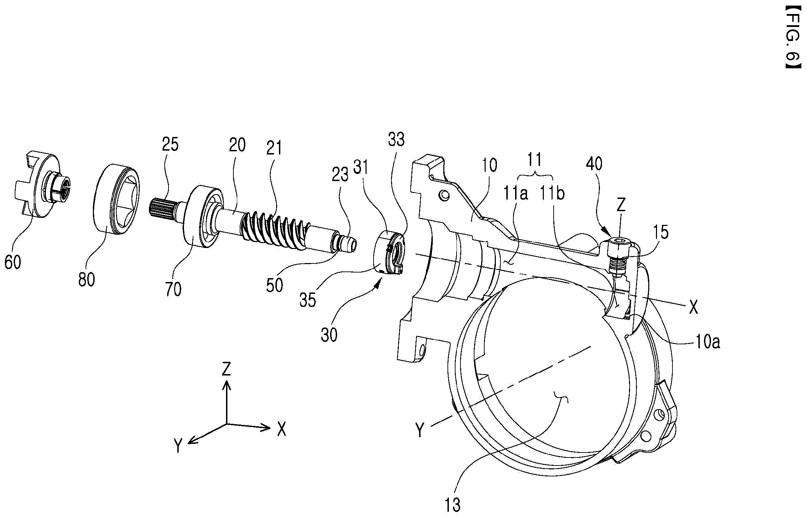

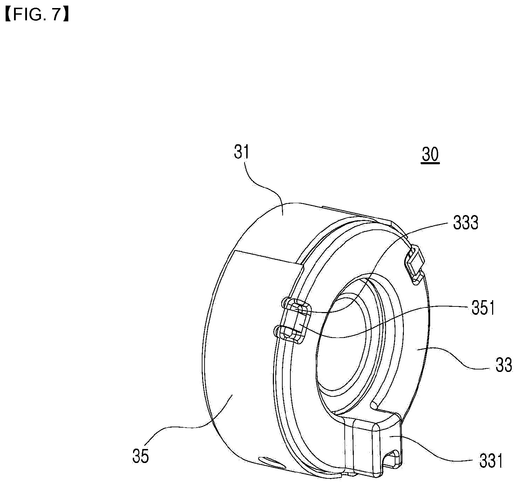

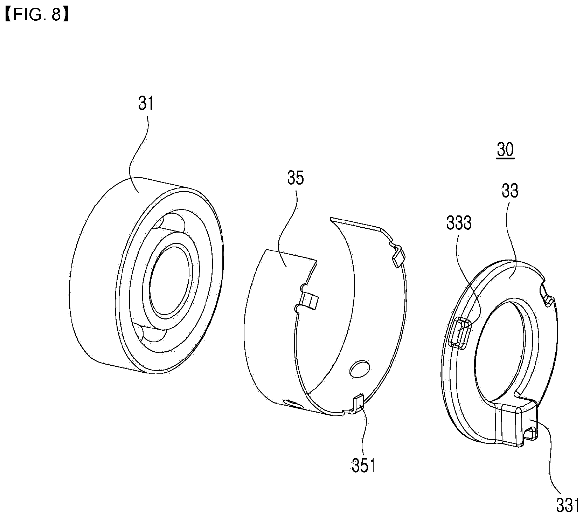

FIG. 4 is a perspective view of an electric power steering system according to an embodiment of the present invention, FIG. 5 is a sectional view of an electric power steering system according to an embodiment of the present invention, FIG. 6 is an exploded perspective view of an electric power steering system according to an embodiment of the present invention, FIG. 7 is a perspective view of a tilt plug of an electric power steering system according to an embodiment of the present invention, and FIG. 8 is an exploded perspective view of a tilt plug of an electric power steering system according to an embodiment of the present invention.

Referring to FIG. 4 to FIG. 6, an electric power steering system according to an embodiment of the present invention has an improved structure of a tilt mechanism supporting a worm shaft 20, and includes a housing 10 and the worm shaft 20.

The housing 10 defines a plurality of receiving spaces 11, 13 and 15 therein to receive the worm shaft 20, a tilt plug 30 and an elastic supporter 40.

In detail, the first receiving space 11 including a first receiving portion 11a receiving the worm shaft 20 and a second receiving portion 11b formed to have a shape corresponding to an outer contour of the tilt plug 30 so as to receive the tilt plug 30, the second receiving space 13 in which a worm wheel (not shown) is disposed and the third receiving space 15 in which the elastic supporter 40 is disposed may be formed within the housing 10.

Here, the first receiving space 11, the second receiving space 13 and the third receiving space 15 may have cylindrical shapes having different center axes X, Y and Z.

In more detail, the first receiving space 11 is formed to have a cylindrical shape having a center axis in an X axis direction into which the worm shaft 20 is inserted, the second receiving space 13 is formed to have a cylindrical shape having a center axis in a Y axis direction perpendicular to the X axis, and the third receiving space 15 is formed to have a cylindrical shape having a center axis in a Z axis respectively perpendicular to the X axis and the Y axis.

In addition, one side of the first receiving space 11 is closed and the other side of the first receiving space 11 may be opened.

That is, one side of the second receiving portion 11b in which the tilt plug 30 is disposed is formed to be closed, and thus when the worm shaft 20 is coupled to the tilt plug 30, the tilt plug 30 pushed by the worm shaft 20 can be supported thereagainst.

The worm shaft 20 is subsequently disposed in the first receiving space 11 to be engaged with a worm wheel (not shown) which is coupled to a steering column (not shown).

In detail, the worm shaft 20 is disposed in the first receiving space 11 of the housing 10 and is engaged with a worm wheel disposed in the second receiving space 13 of the housing 10 via a worm 21 formed on an outer circumferential surface thereof so as to transmit a driving force of a motor (not shown) to the steering column.

Here, a coupling portion 23 having a shape corresponding to an inner circumferential surface of the tilt plug 30 and the worm 21 engaged with the worm wheel may be formed on the worm shaft 20. Further, a serration 25 which is able to be coupled with a coupler 60 which is connected to the motor is formed on the worm shaft 20, and a main bearing 70 which supports load of the worm shaft 20 during the rotation of the worm shaft 20 and a supporting member 80 which supports the main bearing 70 in a direction of a center axis of the worm shaft 20 to prevent the main bearing 70 from being separated may be provided next to the serration 25.

In addition, a press-fitted member 50 may be provided at a portion of the worm shaft 20 which is coupled to an inner circumferential surface of the tilt plug 30.

The press-fitted member 50 is press-fitted into a space between an outer circumferential surface of the worm shaft 20 and an inner circumferential surface of the tilt plug 30 when the worm shaft 20 and the tilt plug 30 are coupled to one another, so as to fasten the worm shaft 20 to the tilt plug 30.

The press-fitted member 50 may be formed of elastic material such as rubber and may be coupled to a portion of the worm shaft 20 and is press-fitted into the tilt plug 30 during the coupling of the worm shaft 20 and the tilt plug 30 to generate friction between the tilt plug 30 and the worm shaft 20 so as to fasten the worm shaft 20 to the tilt plug 30 and to fill up a gap between the worm shaft 20 and the tilt plug 30 so as to prevent foreign substances from inflowing through between the worm shaft 20 and the tilt plug 30.

The electric power steering system according to an embodiment of the present invention includes the tilt plug 30.

Referring to FIG. 4 and FIG. 5, the tilt plug 30 is previously coupled to an inner circumferential surface of the housing10 to be fastened to a predetermined position, and is coupled with the worm shaft 20 which is being inserted into the first receiving space 11 so as to support the worm shaft 20.

In more detail, the tilt plug 30 may be disposed in the first receiving space 11 to be supported against the closed side surface of the housing 10 and may have the same center axis with the center axis of the first receiving space. Accordingly, in the coupling with the worm shaft 20 inserted into the first receiving space 11, the tilt plug 30 can support the worm shaft 20 in a direction of a center axis and also can align the center axis of the worm shaft 20 to coincide with the center axis of the first receiving space 11. Here, as shown in FIG. 6 and FIG. 7, on one side surface of the tilt plug 30 facing with the closed surface of the housing 10, a coupling protrusion 331 which protrudes in a direction of a center axis of the tilt plug 30 from an end of the tilt plug 30 and slides into an inner surface of the housing 10. Further, a coupling indentation 10a into which the coupling protrusion 331 can slide is formed on an inner surface of the housing 10 facing the surface of the tilt plug 30 where the coupling protrusion 331 is formed, so that the tilt plug 30 is restricted from rotating in a clockwise or in a counter clockwise about a center axis (X axis in FIG. 6).

The tilt plug 30 does not move in a circumferential direction (clockwise or counter clockwise about X axis in FIG. 6) due to the sliding coupling of the coupling protrusion 331 formed on one surface thereof with the coupling indentation 10a formed in the housing 10, and at the same time may be disposed to be pushed by the elastic supporter 40 to move in an axis direction (Z axis direction in FIG. 6) of the third receiving space 15 when wear of teeth of the worm wheel and the worm shaft occurs. Here, the coupling indentation 10a is formed in a size to restrict the rotation of the coupling protrusion 331 and simultaneously to allow the movement of the coupling protrusion 331 in a Z axis direction. For example, the coupling indentation 10a and the coupling protrusion 331 may have the corresponding width, and the coupling indentation 10a may have a height greater than that of the coupling protrusion 331.

Referring to FIG. 7 and FIG. 8, the tilt plug 30 may include a bearing 31, a sliding coupling portion 33 and an elastic ring 35.

In detail, the bearing 31 of the tilt plug 30 may be coupled to the worm shaft 20, the sliding coupling portion 33 supports the bearing 31 in a direction of a center axis of the tilt plug 30 and is provided with the coupling protrusion 331 at a surface thereof facing the inner surface of the hosing 10 so as to be coupled to the inner surface of the housing 10, and the elastic ring 35 encloses the outer circumferential surface of the bearing 31 and is coupled to the sliding coupling portion 33 to fix the bearing 31.

The sliding coupling portion 33 may be formed in a ring-shaped member which contacts one side surface of the bearing 31 and has the same diameter with the bearing 31, and may be formed of elastic material to be able to disperse an axial load acting on the bearing 31 during the coupling to the worm shaft 20. Further, the coupling protrusion 331 is protruded on one side surface of the sliding coupling portion 33, and hooking indentations 333 to which hooking portions 351 of the elastic ring 35 are hooked for fixing may be formed on an outer radial end of the sliding coupling portion 33.

The elastic ring 35 may be formed in a ring shape enclosing an outer circumferential surface of the bearing 31 and may be formed of elastic material to provide an elastic force in a radial direction. Further, the hooking portions 351 which are bent to a predetermined angle from an end portion of the elastic ring 35 toward a center axis to be able to be hooked and supported by the hooking indentations 33 may be formed.

Here, a plurality of the hooking indentations 333 formed in the sliding coupling portion 33 and a plurality of the hooking portions 351 may be disposed along a circumferential direction may be provided so as to lead a stable coupling.

In addition, the tilt plug 30 may be configured such that the bearing 31 is directly supported by the elastic supporter 40.

One side of the elastic ring 35 may be opened so as to expose a portion of the bearing 31 to the first receiving space 11. Further, the coupling indentation 10a of the housing 10 may be formed at a predetermined position to align the open portion of the elastic ring 35 to face the third receiving space 15 in which the elastic supporter 40 is disposed when the tilt plug 30 is coupled to the housing 10.

Accordingly, when the elastic supporter 40 is installed in the housing 10, the elastic supporter 40 can directly contact the bearing 31 via the open portion of the elastic ring 35 to elastically support the bearing 31 without being interfered by the elastic ring 35. Thus, a supporting force of the elastic supporter 40 can be precisely delivered to the worm shaft 20.

The electric power steering system according to an embodiment of the present invention includes the elastic supporter 40.

Referring to FIG. 4 and FIG. 5, the elastic supporter 40 is configured to be able to be installed in the housing 10 to elastically support the tilt plug 30 toward the worm wheel.

In more detail, the elastic supporter 40 may include a supporting portion 41 which contacts the tilt plug 30 and is disposed to be linearly movable along the Z axis direction, a regulation portion 43 which is coupled to the housing 10 to engage with an end portion of the supporting portion 41 and is configured to regulate a pressing force of the supporting portion 41 supporting the bearing 31 by manipulation of a separate tool, and an elastic member 45 which is interposed between the supporting member 41 and the regulation portion 43 to exert an elastic force to the supporting portion 41.

As such, according to an embodiment of the present invention, since after fastening the bearing to an end portion of the worm shaft by a press-fit connection, the worm shaft 20 which is being inserted into the receiving space is coupled to the tilt plug 30, which has already slid into an inner surface of the housing 10, such that the center axis of the worm shaft 20 is aligned to coincide with the center axis of the receiving space, an inner structure becomes simple and the assembling processes are reduced so as to lead an enhanced productivity and a reduced manufacturing cost.

Since the tilt plug 30 is previously disposed by a sliding coupling at a predetermined position within the housing 10 before being coupled to the worm shaft 20, it can be precisely assembled with the worm shaft 20 and reassembling due to the twisting of the worm shaft 20 can be prevented, and thus a steering performance can also be enhanced.

Since one side of the housing 10 within which the tilt plug 30 is disposed is closed, parts existing inside the housing 10 can be prevented from being separated from the housing 10 even when external force is applied to the housing 10.

### [Industrial Applicability]

The present invention relates to an electric power steering system, so it has an industrial applicability.

## Claims

1. An electric power steering system comprising:
a housing (10) defining a receiving space (11) therein;
a worm shaft (20) which is disposed in the receiving space (11) to be engaged with a worm wheel;
a tilt plug (30) which is coupled to the worm shaft (20) which is being inserted into the receiving space (11) to support the worm shaft (20); and
an elastic supporter (40) which is installed to the housing (10) to elastically support the tilt plug (30) toward the worm wheel,
wherein the tilt plug (30) is provided with a coupling protrusion (331) which is protruded in an outward direction, and
wherein the tilt plug (30) is installed in the housing (10) in a state that the coupling protrusion (331) is inserted into a coupling indentation (10a) which is provided to the housing (10) so that a rotation of the tilt plug (30) about a center axis (X) with respect to the housing (10) is restricted,
wherein the coupling indentation (10a) is formed to allow the tilt plug (30) to move for tilting of the worm shaft (20) by the elastic supporter (40),
wherein the tilt plug (30) comprises:
a bearing (31) which is coupled to the worm shaft (20);
a sliding coupling portion (33) which supports the bearing (31) in a direction of a center axis (X) of the tilt plug (30) and is provided with the coupling protrusion (331) formed on one surface thereof to be coupled to an inner surface of the housing (10); and
an elastic ring (35) which encloses an outer circumferential surface of the bearing (31) and is coupled to the sliding coupling portion (33) to fasten the bearing (31), **characterized in that**
a hooking portion (351) which is bent from an end portion of the elastic ring (35) toward a center axis (X) in a predetermined angle to be hooked to an outer surface of the sliding coupling portion (33) to be supported thereto is formed in the elastic ring (35), and **in that**
a hooking indentation (333) to which the hooking
portion (351) is hooked for fastening is formed in the sliding coupling portion (33).

2. The electric power steering system of claim 1, wherein a portion of the elastic ring (35) is opened so as to expose a portion of the bearing (31) to the receiving space (11), and wherein the coupling indentation (10a) is formed at a predetermined position to align the open portion of the elastic ring (35) to face the receiving space (15) in which the elastic supporter (40) is disposed when the tilt plug (30) is installed to the housing (10) so that an end portion of the elastic supporter (40) directly contacts the bearing (31) when the tilt plug (30) is installed in the housing (10).

3. The electric power steering system of claim 1, wherein a first receiving space (11) including a first receiving portion (11a) in which the worm shaft (20) is received and a second receiving portion (11b) which is formed in a shape corresponding to an outer surface of the tilt plug (30) to receive the tilt plug (30) is formed in the housing (10), and wherein one side of the first receiving space (11) is formed to be closed so as to support the tilt plug (30) which is pushed by the worm shaft (20) when the worm shaft (20) is being coupled to the tilt plug (30).

## Patentansprüche

1. Elektrisches Servolenksystem, umfassend:
ein Gehäuse (10), das einen Aufnahmeraum (11) darin definiert;
eine Schneckenwelle (20), die in dem Aufnahmeraum (11) angeordnet ist, um mit einem Schneckenrad in Eingriff zu stehen;
einen Kippstopfen (30), der mit der Schneckenwelle (20) gekoppelt ist, die in den Aufnahmeraum (11) eingeführt ist, um die Schneckenwelle (20) abzustützen; und
eine elastische Stütze (40), die an dem Gehäuse (10) angebaut ist, um den Kippstopfen (30) in Richtung des Schneckenrades elastisch abzustützen,
wobei der Kippstopfen (30) mit einem Kupplungsvorsprung (331) versehen ist, der in einer Richtung nach außen vorsteht, und
wobei der Kippstopfen (30) in dem Gehäuse (10) in einem Zustand eingebaut ist, in dem der Kupplungsvorsprung (331) in eine Kupplungsvertiefung (10a) eingesetzt ist, die an dem Gehäuse (10) vorgesehen ist, so dass eine Drehung des Kippstopfens (30) um eine Mittelachse (X) in Bezug auf das Gehäuse (10) eingeschränkt ist,
wobei die Kupplungsvertiefung (10a) so geformt ist, dass sie eine Bewegung des Kippstopfens (30) zum Kippen der Schneckenwelle (20) durch die elastische Stütze (40) ermöglicht,
wobei der Kippstopfen (30) umfasst:
ein Lager (31), das mit der Schneckenwelle (20) gekoppelt ist;
einen Gleitkupplungsabschnitt (33), der das Lager (31) in einer Richtung einer Mittelachse (X) des Kippstopfens (30) abstützt und mit dem Kupplungsvorsprung (331) versehen ist, der zur Kopplung an eine Innenfläche des Gehäuses (10) auf einer seiner Oberflächen ausgebildet ist; und
einen elastischen Ring (35), der eine äußere Umfangsfläche des Lagers (31) umschließt und mit dem Gleitkupplungsabschnitt (33) gekoppelt ist, um das Lager (31) zu befestigen,
**dadurch gekennzeichnet, dass**
in dem elastischen Ring (35) ein Einhakabschnitt (351) ausgebildet ist, der zum Einhaken an einer Außenfläche des Gleitkupplungsabschnitts (33), um daran abgestützt zu werden, von einem Endabschnitt des elastischen Rings (35) in Richtung einer Mittelachse (X) in einem vorbestimmten Winkel gebogen ist, und dass eine Einhakvertiefung (333), in die der Einhakabschnitt (351) zur Befestigung eingehakt wird, in dem Gleitkupplungsabschnitt (33) ausgebildet ist.

2. Elektrisches Servolenksystem nach Anspruch 1, wobei ein Abschnitt des elastischen Rings (35) geöffnet ist, um einen Abschnitt des Lagers (31) zu dem Aufnahmeraum (11) freizulegen, und wobei die Kupplungsvertiefung (10a) an einer vorbestimmten Position ausgebildet ist, um den offenen Abschnitt des elastischen Rings (35) so auszurichten, dass er dem Aufnahmeraum (15) zugewandt ist, in dem die elastische Stütze (40) angeordnet ist, wenn der Kippstopfen (30) an dem Gehäuse (10) angebaut ist, so dass ein Endabschnitt der elastischen Stütze (40) das Lager (31) direkt berührt, wenn der Kippstopfen (30) an dem Gehäuse (10) eingebaut ist.

3. Elektrisches Servolenksystem nach Anspruch 1, wobei in dem Gehäuse (10) ein erster Aufnahmeraum (11) mit einem ersten Aufnahmeabschnitt (11a), in dem die Schneckenwelle (20) aufgenommen ist, und einem zweiten Aufnahmeabschnitt (11b), der in einer Form ausgebildet ist, die einer Außenfläche des Kippstopfens (30) entspricht, um den Kippstopfen (30) aufzunehmen, ausgebildet ist, und wobei eine Seite des ersten Aufnahmeraums (11) so ausgebildet ist, dass sie geschlossen ist, um den Kippstopfen (30) abzustützen, der von der Schneckenwelle (20) geschoben wird, wenn die Schneckenwelle (20) mit dem Kippstopfen (30) gekoppelt ist.

## Revendications

1. Système de direction à assistance électrique comprenant :
un logement (10) définissant un espace de réception (11) à l'intérieur de celui-ci ;
un arbre à vis sans fin (20) qui est disposé dans l'espace de réception (11) pour être engagé avec une roue à vis sans fin ;
un bouchon d'inclinaison (30) qui est couplé à l'arbre à vis sans fin (20) qui est inséré dans l'espace de réception (11) pour supporter l'arbre à vis sans fin (20) ; et
un moyen de support élastique (40) qui est installé sur le logement (10) pour supporter élastiquement le bouchon d'inclinaison (30) par rapport à la roue à vis sans fin,
dans lequel le bouchon d'inclinaison (30) est doté d'une projection de couplage (331) qui se projette dans une direction extérieure, et
dans lequel le bouchon d'inclinaison (30) est installé dans le logement (10) dans un état dans lequel la projection de couplage (331) est insérée dans une encoche de couplage (10a) qui est prévue sur le logement (10) de manière à restreindre une rotation du bouchon d'inclinaison (30) autour d'un axe central (X) par rapport au logement (10),
dans lequel l'encoche de couplage (10a) est formée pour permettre au bouchon d'inclinaison (30) de se déplacer pour l'inclinaison de l'arbre à vis sans fin (20) via le moyen de support élastique (40),
dans lequel le bouchon d'inclinaison (30) comprend :
un palier (31) qui est couplé à l'arbre à vis sans fin (20) ;
une portion de couplage de coulissement (33) qui supporte le palier (31) dans une direction d'un axe central (X) du bouchon d'inclinaison (30) et qui est dotée de la projection de couplage (331) formée sur une surface de celle-ci pour être couplée à une surface intérieure du logement (10) ; et
un anneau élastique (35) qui entoure une surface circonférentielle extérieure du palier (31) et qui est couplé à la portion de couplage de coulissement (33) pour fixer le palier (31),
**caractérisé en ce que**
une portion d'accrochage (351) qui est cintrée depuis une portion d'extrémité de l'anneau élastique (35) vers un axe central (X) dans un angle prédéterminé pour être accrochée à une surface extérieure de la portion de couplage de coulissement (33) pour être supportée par celle-ci est formée dans l'anneau élastique (35), et **en ce qu'**une encoche d'accrochage (333) à laquelle la portion d'accrochage (351) est accrochée pour la fixation est formée dans la portion de couplage de coulissement (33).

2. Système de direction à assistance électrique selon la revendication 1, dans lequel une portion de l'anneau élastique (35) est ouverte de manière à exposer une portion du palier (31) à l'espace de réception (11), et dans lequel l'encoche de couplage (10a) est formée à une position prédéterminée pour aligner la portion ouverte de l'anneau élastique (35) pour qu'elle soit en face de l'espace de réception (11) dans lequel le moyen de support élastique (40) est disposé quand le bouchon d'inclinaison (30) est installé sur le logement (10) de telle sorte qu'une portion d'extrémité du moyen de support élastique (40) vient directement en contact avec le palier (31) quand le bouchon d'inclinaison (30) est installé dans le logement (10).

3. Système de direction à assistance électrique (1), dans lequel un premier espace de réception (11) incluant une première portion de réception (11a) dans laquelle l'arbre à vis sans fin est reçu et une seconde portion de réception (11b) qui est réalisée dans une forme correspondant à une surface extérieure du bouchon d'inclinaison (30) pour recevoir le bouchon d'inclinaison (30) est formé dans le logement (10), et dans lequel un côté du premier espace de réception (11) est formé pour être fermé de manière à supporter le bouchon d'inclinaison (30) qui est poussé par l'arbre à vis sans fin (20) quand l'arbre à vis sans fin (20) est en train d'être couplé au bouchon d'inclinaison (30).
